# EUROPEAN PATENT APPLICATION

(11) **EP 0 872 600 A1**
(43) Date of publication of application: **21.10.1998**
(21) Application number: 98302269.0
(22) Date of filing: 25.03.1998
(51) Int. Cl.: E03C 1/04, E03B 7/07

(54) **Water treatment and delivery apparatus**

(30) Priority: 19.04.1997 GB 9707949
(71) Applicant: Walker, David MacAlistair, Leicestershire LE12 8NB (GB)
(72) Inventor: Walker, David MacAlistair, Leicestershire LE12 8NB (GB)
(74) Representative: SERJEANTS

(57) **Abstract**

A water treatment and delivery apparatus comprising a tap or faucet (16) for controlling the supply of water at mains pressure to a delivery spout (14) and between the tap or faucet (16) and an outlet nozzle (15) of the delivery spout (14) a replaceable cartridge (20) containing packing material for filtering and/or deionizing and/or chemically treating water passing to the outlet nozzle (15). To change the water treatment material when its activity is exhausted requires simple removal of the old cartridge (20) and replacement with a new cartridge (20) containing fresh treatment material. The invention also provides a filtration unit for providing filtered and deionized water to a location above a sink, comprising an under-sink filter unit for filtering water from a mains supply and delivering the filtered water to a dispensing tap or faucet (16) and a delivery spout (14) for delivering the filtered water from the tap or faucet (16) to the location above the sink, in which between the tap or faucet (16) and an outlet nozzle (15) of the delivery spout (14) there is a replaceable cartridge (20) containing packing material for deionizing and/or chemically treating the filtered water passing from the tap or faucet (16) to the outlet nozzle (15).

## Description

### Field of the Invention

The invention relates to apparatus for treating and delivering water from a tap or faucet. Throughout this specification the word "tap" or "faucet" is used to denote any valve for controlling the flow of water through a delivery pipe.

### Background Art

Water filters are known for use in domestic environments for providing a supply of filtered mains water through a tap or faucet that is generally provided immediately adjacent a kitchen sink. A conventional supply apparatus for such a filtered water supply would be a narrow bore swan-neck delivery spout of internal diameter 1.0 cm or less, leading from a lever-actuated tap or faucet. The swan-neck delivery pipe would normally have one or two rubber O-ring seals at its lower end to enable it to seal with the tap or faucet while still permitting angular rotation. The entire installation would comprise a filter chamber at mains pressure beneath the kitchen sink, a mains water supply to the filter chamber and a connection between the filter chamber and the tap or faucet to pass filtered water through the swan-neck delivery pipe when the lever of the tap or faucet is actuated.

The filter chamber typically would contain a granular activated carbon filter medium which would remove from the mains water all sediment, particles and water-borne organisms. Filtration is real-time, meaning that the water flows directly from the mains supply through the filter to the tap or faucet and swan-neck delivery pipe when the tap or faucet lever is depressed. There is no intervening reservoir between the filter and the tap or faucet for the storage of a quantity of filtered water for supply when needed.

The above domestic water filtration and supply apparatus delivers good quality drinking water which is cleaner than unfiltered water. The supply is slower than that through a tap or faucet delivering unfiltered water at mains pressure, because a pressure gradient is established through the filter medium and that slows down the flow. The apparatus is used mainly to fill drinking glasses, jugs, kettles and cooking pans; so generally volumes of no more than one litre at a time are dispensed. The relatively slow delivery rate is therefore not a problem. However, it is a problem that the active carbon filter is ineffective in removing soluble ionic compounds from the water. A hard water supply, with a high content of dissolved calcium salts, cannot be converted to a soft water supply by passing it through an activated carbon filter.

It is known that hard water can be converted to soft water by removal of dissolved alkaline earth metal salts using an ion exchange resin. The resin removes the alkaline earth metal ions such as calcium ions Ca⁺⁺ and replaces them with sodium ions Na⁺. Such ion exchange resins are used in commercial water purification systems and provide good soft deionized water. The lifetime of an ion exchange resin, before it has to be recharged or replaced, is however considerably less than that of an active carbon filter. In an under-sink carbon filtration unit, the filter packing would be designed to be changed once every six months, once every year or once every three years according to the model and design of filtration unit. An ion exchange resin would need replacement every month. For that reason, no filtration unit has yet been offered for commercial sale with both a carbon filter and an ion exchange resin in the same unit. All attempts to design such a unit have followed either the design logic of attempting to extend substantially the lifetime of the ion exchange unit or attempting to provide in the under-sink filter a readily accessible and readily replaceable cartridge of ion exchange resin which can be replaced without spilling water from the filter unit, without disturbing the more permanent carbon filter and without requiring plumber's tools to open and close the filter unit housing.

EP 9707949.5 discloses a tap for treating and dispensing water, in which the delivery spout is a moulded swan-neck spout within which is encapsulated a treatment medium which may be an ion exchange resin, a carbon filter material or any other suitable treatment medium. When the medium is exhausted or contaminated, the entire spout is discarded and replaced by a new one. Although this solution provides the optimum ease of replacement of the filter medium, the cost of replacing a complete spout at regular intervals of one month or thereabouts could make this solution unattractive to the end user.

This invention therefore seeks to provide a water treatment and delivery apparatus which avoids all the above disadvantages.

There is also a need to provide other types of efficient treatment of water from a mains supply. In different circumstances the water may require disinfection to kill organisms or chemical treatment to remove contaminants such as lead or nitrates.

### The Invention

The invention provides a water treatment and delivery apparatus comprising a tap or faucet for controlling the supply of water at mains pressure to a delivery spout, and between the tap or faucet and an outlet nozzle of the delivery spout a replaceable cartridge containing packing material for filtering and/or deionizing and/or chemically treating water passing to the outlet nozzle.

The invention is based on a realization of the advantages of containing the packing material in a replaceable cartridge and of positioning the replaceable cartridge downstream of the tap or faucet. In conventional under-sink water filtration installations steps have to be taken to isolate the filter chamber from mains water pressure before opening that chamber to replace the filter material. This invention utilizes the supply tap or faucet itself as the isolating means, and provides the replaceable cartridge in an over-sink location between the tap or faucet and the outlet nozzle of the delivery spout.

In one preferred embodiment the replaceable cartridge is in the delivery spout itself, so that for replacement of the packing material the delivery spout is removed and opened up, and a new cartridge inserted. In such an embodiment the delivery spout, which may be a swan-neck spout, has at one end its outlet nozzle and at the other end a swivel coupling incorporating at least one O-ring seal for coupling the delivery spout to a valve block of a tap or faucet in a manner that enables the spout to swivel from side to side in normal use and to be easily removable for replacement.

By packing the water treating material as a readily replaceable cartridge in an easily removable swan-neck delivery spout, the invention provides an effective solution to the aforementioned problems. To change the treatment material when its activity is exhausted requires simple removal of the old cartridge and replacement with a new cartridge containing fresh treatment material. Because the cartridge is a self-contained unit, there is little risk of contaminating its contents during replacement and the invention accordingly allows improved hygiene.

In another equally preferred embodiment of the invention the replaceable cartridge can be housed in a valve block for the tap or faucet, so that water delivered through the tap or faucet passes through the packing material before reaching the delivery spout. Either the valve block may be a single faucet valve block for controlling only the on/off supply of water through the packing material and delivery spout, or the valve block may be a composite valve block incorporating taps or faucets for the independent supply of domestic hot water and untreated cold water to a sink-top delivery spout and a separate tap or faucet for the supply of a separate drinking water delivery spout.

The delivery spout may be a simple push fit into the valve block where it is sealed by the one or more O-rings carried by the swivel coupling of the spout. Sealing contact is made with a cylindrical inner surface of an outlet bore of the valve block of the tap or faucet, so that the delivery spout can swivel about its vertical axis without affecting the seal. If desired, a screw-thread at the end of the delivery spout can engage with a cooperating thread in the outlet bore of the valve block, to retain the spout in position. The O-ring seal or seals are still utilized for sealing, but the removal of the delivery spout then requires a preliminary turn or turns to disengage the screw threads before it can be lifted out of the valve block. The delivery spout unit may be made from metal or plastic.

In a further embodiment of the invention the replaceable filter cartridge can be housed in an above-sink stand-alone housing communicating with the tap or faucet and with the delivery spout.

The packing material of the cartridge is preferably an ion exchange resin for softening hard water. Other alternatives are a filter material such as granular activated carbon; a source of chlorine for disinfection of the water, which may be accompanied by a filter material downstream to remove chlorine from the disinfected water; or materials for removing chemical contaminants such as lead or nitrates from the water.

Bacterial filters are available which are capable of removing bacteria from a water supply by filtration. One such range of filters takes the form of ceramic disc filters. Preferably the packing material of the cartridge includes one such filter before or after the packing materials discussed above. If the ceramic disc filter is positioned downstream of other filter material such as active carbon then it requires cleaning less frequently than if it were positioned upstream, but the upstream location has the advantage that the bacteria are removed from the water supply before the packing material, so that the packing material does not become a breeding ground for bacterial growth. Any bacterial filter incorporated into the cartridge will however require regular removal and cleaning since the small pore size encourages clogging.

The cartridge for use with apparatus according to the invention may be used with sources of cold, hot or boiling mains-pressure water, provided that a packing material effective at the appropriate temperature is used. For maximum effectiveness, most packing materials will require a certain contact time with the water flowing through them. Accordingly the invention may provide means, such as a constriction in the water flow path, for limiting the flow of water through the spout to a rate at which the filtering, disinfecting or chemical treatment effect of the packing material is most efficient.

The invention also provides a filtration and treatment unit for dispensing filtered and deionized water at a location above a sink, comprising an under-sink filter unit for filtering water from a mains supply and delivering the filtered water at mains pressure to a dispensing tap or faucet, and a replaceable cartridge for deionizing and/or chemically treating the water delivered from the tap or faucet to an outlet nozzle of a delivery spout.

In a unit according to this aspect of the invention, the filter medium in the under-sink filter is preferably activated charcoal. The filter medium is preferably packed in a replaceable cartridge container, which according to size requires replacement every six months, one year or three years. In contrast, the replaceable cartridge containing the ion exchange resin of the unit of the invention requires replacement every month, but that is no problem because the replacement operation is so quick and easy, involving simply pulling out and discarding one resin-packed cartridge and pushing a new one into place while the tap or faucet is turned off. No under-sink work is involved, and replacement is just as simple as the regular washing down and cleaning of a sink surround.

### Drawings

Figure 1 is a partial axial section through a water treatment and delivery apparatus according to the invention; and
Figure 2 is a partial axial section through a second embodiment of a water treatment and delivery apparatus according to the invention.

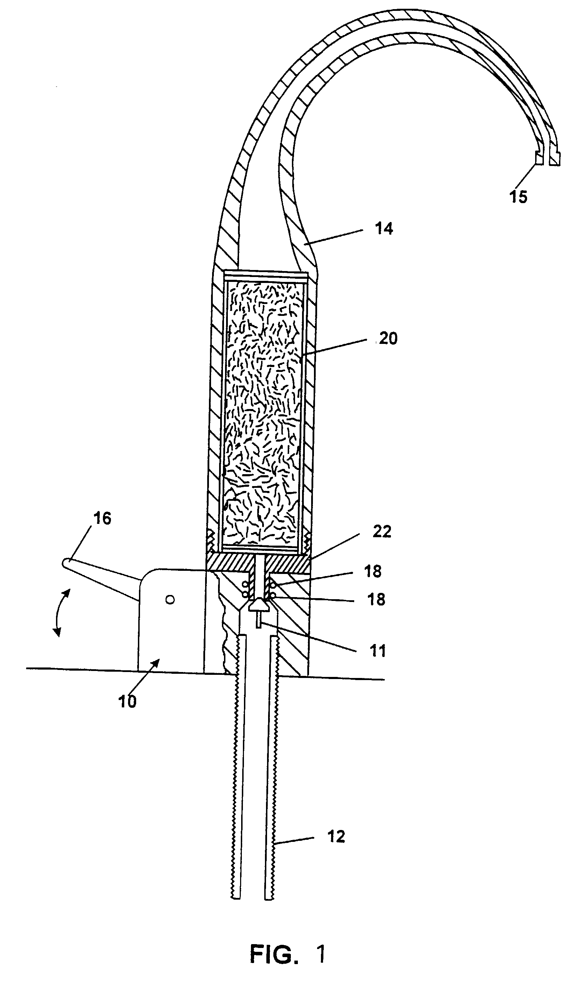

Figure 1 illustrates a water treatment and delivery apparatus in which a valve block 10 has an associated on-off valve (illustrated schematically as 11) for controlling the flow of water at mains pressure through the valve block from an inlet pipe 12 to a delivery spout 14 which terminates in an outlet nozzle 15. The on/off valve is controlled by a mechanism 16 which as illustrated is a spring actuated lever. The on-off valve 11 is shown simply as a valve member seated on an annular valve seating to interrupt the water flow from the inlet pipe 12 towards the delivery spout 14. No mechanism is shown for unseating the valve 11 to permit water flow, but it will be understood that a range of such mechanisms is available and any may be chosen in accordance with the invention. Equally the actuating lever 16 may be replaced by a rotary tap.

The delivery spout 14 is easily removable from the valve block 10, in which it is received as a simple push fit with the necessary water seal being established by two O-ring seals 18.

The construction thus far described is generically the same as that described in EP 97310277.5 in which the delivery spout 14 is permanently filled with packing material which may be a filter medium, an ion exchange resin, an impregnated packing for chemically treating the water passing through the delivery spout, or a packing with two or more of the above functions. In this first embodiment of the present invention, however, the packing material is inserted into the delivery spout 14 in the form of a cartridge 20 which can be removed in its entirety and replaced. To remove the cartridge, the delivery spout 14 can be lifted out of the valve block 10, opened by unscrewing a bottom cap 22 to expose a cartridge chamber, and the cartridge 20 may then be exchanged. Instead of the screw fitting to connect together the delivery nozzle 14 and its end cap 22 as illustrated, any other quick release and watertight fastening might be adopted, such as a bayonet fixing.

The apparatus has all of the advantages of that disclosed in EP 97310277.5 plus the additional advantage that when it becomes time to change the filter cartridge, only a relatively inexpensive cartridge need be exchanged, and not the entire delivery spout.

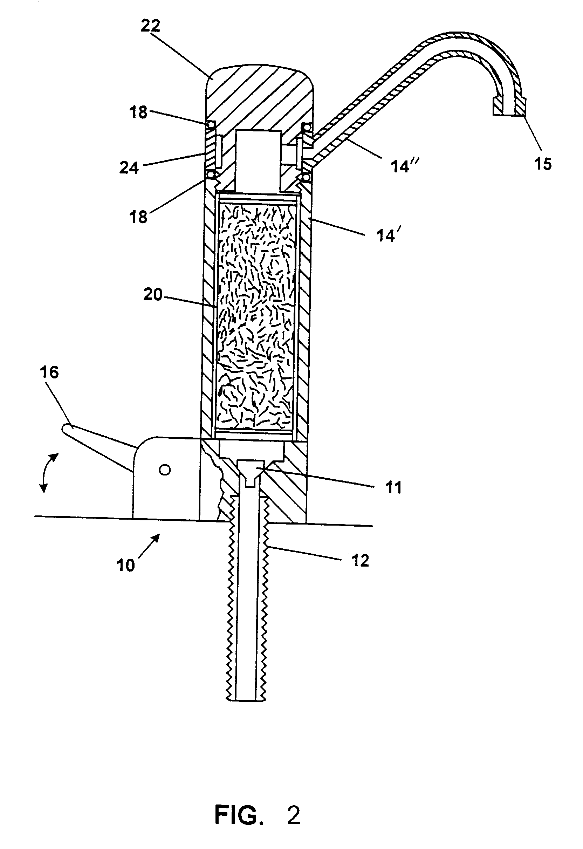

Figure 2 illustrates a second embodiment, in which many of the parts are essentially the same as those illustrated in Figure 1. Parts with the same function have been given the same reference numerals as in Figure 1. The principal difference between Figures 1 and 2 is that in Figure 2 the cap 22 which retains the cartridge 20 in position is located at the top of a fixed pedestal portion 14' of the delivery spout. To change the cartridge 20, the end cap 22 is removed, the cartridge lifted out and a new one inserted, and the cap 22 is then replaced. There is no need to take the entire spout 14 out of its valve block 10.

Because the portion 14' of the delivery spout which is connected to the valve block 10 is immovable, the delivery nozzle end 14'' of the spout 14 extends from a rotary bushing 24 which is rotatable with respect to the fixed portion 14' and the end cap 22 of the delivery spout 14.

In both illustrated embodiments, the cartridge is readily replaceable, and can be replaced without having to replace the entire spout. If the cartridge contains ion exchange resin, then it should be replaced every two to four weeks. This is in contrast with carbon filters, which have up until now been provided in under-sink installations and which require changing only every one, two or even three years. The apparatus of the invention may be used in conjunction with such an under-sink filter, in which case the cartridge 20 would contain only ion exchange resin and would require changing every two to four weeks. Alternatively the water supply to the apparatus of the invention could be completely untreated domestic mains water, in which case it would be desirable for the cartridge 20 to contain both a filter medium and an ion exchange resin or other chemical treatment means. In that case the carbon filter medium would be replaced rather more frequently than is strictly necessary, but the cartridge would still need to be replaced every two to four weeks to renew the exhausted ion exchange resin.

## Claims

1. A water treatment and delivery apparatus comprising a tap or faucet (16) for controlling the supply of water at mains pressure to a delivery spout (14), characterized in that between the tap or faucet (16) and an outlet nozzle (15) of the delivery spout (14) there is a replaceable cartridge (20) containing packing material for filtering and/or deionizing and/or chemically treating water passing to the outlet nozzle (15).

2. Apparatus according to claim 1, wherein the packing material is an ion exchange resin.

3. Apparatus according to claim 1, wherein the packing material comprises a filter material and an ion exchange resin.

4. Apparatus according to claim 3, wherein the filter material in the packing material is active carbon.

5. Apparatus according to any preceding claim, wherein the cartridge (20) also contains a bacterial filter for removing bacteria from the water as it passes to the outlet nozzle (15).

6. Apparatus according to any preceding claim, wherein the cartridge (20) is in the delivery spout (14) itself.

7. Apparatus according to any of claims 1 to 5, wherein the cartridge (20) is in a valve block (10) for the tap or faucet (16).

8. Apparatus according to claim 7, wherein the valve block is a single faucet valve block for controlling only the on/off supply of water through the packing material and delivery spout.

9. Apparatus according to claim 7, wherein the valve block is a composite valve block incorporating taps or faucets for the independent supply of domestic hot water and untreated cold water to a sink-top delivery spout and a separate tap or faucet for the supply of filtered and treated cold water to a separate drinking water delivery spout.

10. A filtration unit for providing filtered and deionized water to a location above a sink, comprising an under-sink filter unit for filtering water from a mains supply and delivering the filtered water to a dispensing tap or faucet (16) and a swan-neck delivery spout (14) for delivering the filtered water from the tap or faucet (16) to the location above the sink, characterized in that between the tap or faucet (16) and an outlet nozzle (15) of the delivery spout (14) there is a replaceable cartridge (20) containing packing material for deionizing and/or chemically treating water passing to the outlet nozzle (15).
